## Europäisches Patentamt

## European Patent Office

## Office européen des brevets

(11) Publication number: **0 192 802**
**B1**

## EUROPEAN PATENT SPECIFICATION

(45) Date of publication of patent specification: **26.07.89**

(51) Int. Cl.⁴: **A 63 H 33/00**

(21) Application number: **85104431.3**

(22) Date of filing: **11.04.85**

(54) Training toy blocks.

(30) Priority: **27.02.85 JP 27748/85**

(43) Date of publication of application:
**03.09.86 Bulletin 86/36**

(45) Publication of the grant of the patent:
**26.07.89 Bulletin 89/30**

(84) Designated Contracting States:
**DE FR GB IT**

(56) References cited:
**CH-A- 558 193**
**DE-A-2 656 777**
**FR-A-2 460 145**
**US-A-1 465 637**
**US-A-4 123 583**

(73) Proprietor: **Kabushiki Kaisha Studio Plex**
**Kyoto Center Building 3rd Floor No. 2-8, Ginza 8-chome**
**Chuo-ku Tokyo (JP)**

(72) Inventor: **Ohori, Noriyuki Kyoto Center Bldg. 3rd Floor**
**No. 2-8, Ginza 8-chome**
**Chuo-ku Tokyo (JP)**
Inventor: **Harigai, Akinori Kyoto Center Bldg. 3rd Floor**
**No. 2-8, Ginza 8-chome**
**Chuo-ku Tokyo (JP)**

(74) Representative: **Wey, Hans-Heinrich, Dipl.-Ing. et al**
**Patentanwälte Wey & Partner**
**Widenmayerstrasse 49**
**D-8000 München 22 (DE)**

EP 0 192 802 B1

Courier Press, Leamington Spa, England.

## Description

The present invention relates to training toy blocks, and more particularly it relates to training toy blocks each representing an alphabetical character in three-dimensions and capable of being transformed into another form simulating an object identified by a word whose first letter begins with the character represented by the toy block.

There are known in the art various training toys, such as blocks for use in learning letters, building blocks for assembling some other constructions, cards of the Japanese syllabary, and the like. Among training blocks for use in learning letters, for example in Japanese, a set of 48 Japanese letters are each depicted on one surface of the block while on another surface a picture is depicted. In this case the picture represents an object identified by the word whose first letter begins with the letter depicted on the block. Similarly, as for the English alphabets, a set of 26 letters are each depicted on one surface of the block while on another surface a corresponding picture is depicted. In particular, for the alphabetical letter "A", a picture of an angel for example is given, and for the letter "B" a picture of a bus is given.

Training toy blocks of this type have generally been used for the purpose of effectively teaching children letters and those typical words using as the first letters the letters depicted on the blocks. Conventionally, the shape of the block is commonly of the cube or rectangular prism and all of the set of blocks have the same shape. In learning the letters, children look at the letter on one surface of the block and usually turn upside down to look at the corresponding picture, and repeat the above operations.

Since all of the blocks for respective alphabetical letters have the same shape, there arise some problems that giving a vivid impression of the letter is somewhat difficult and that producing satisfactory results in learning is not expected. In addition, due to the same shape of the block, it is hard to keep the children interested in learning the letters for a long time because they often become tired of playing with such conventional blocks. Furthermore, the prior art training toy blocks have not incorporated any concept to use such blocks as toys of another nature.

It is therefore a principal object of the present invention to provide training toy blocks which can make children learn letters and words with ease.

It is another object of the present invention to provide training toy blocks which can be used as another type of toys.

According to the invention, the training toy blocks have each a block body of the shape capable of representing an alphabetical letter in three-dimensions, said block body being provided with a conversion member or with conversion members coupled to said block body in such a way that said conversion member/members is/are movable between two positions one being the position in which the block body forms said alphabetical letter in three-dimensions and the other one being a position in which the block body and the conversion member/members simulate an object to be identified by a word using the alphabetical letter of the block body as the first letter of said word. Since, the block body itself has the shape representing in three dimensions the letter, the visual recognition of the letter can be attained directly from the overall shape of the block body. Further, since the conversion member or members are provided so as to be displaced relative to the block body, the block itself may be used as an independent form-convertible toy.

These and other objects and advantages of the invention may be readily ascertained by referring to the following description and appended drawings in which:

Figs.1A and 1B are perspective views of an embodiment of the training toy blocks according to the present invention, the embodiment standing for a letter A;

Figs.2A and 2B are similarly perspective views of an embodiment standing for a letter B;

Figs.3A and 3B are similarly perspective views of an embodiment standing for a letter C;

Figs.3C and 3D are front views respectively showing the block taking a cat figure and the block taking a letter C;

Figs.4A and 4B are similarly perspective views of an embodiment standing for a letter D; and

Fig.5 is a perspective view of an embodiment of the training block according to the present invention, the embodiment standing for a letter P.

Preferred embodiments of the training toy blocks according to the present invention will now be described with reference to the accompanying drawings.

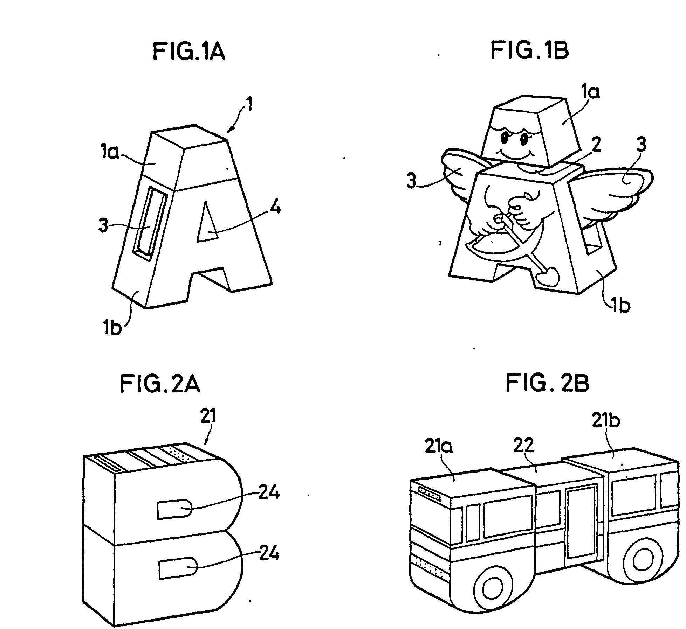

Figs.1A and 1B are perspective views showing an embodiment of the training toy blocks standing for an alphabetical character A. As seen from the figures, a block body generally indicated by numeral 1 is of a shape representing in three-dimensions the letter A. The block body 1 takes a figure of an angel which word starts with the letter A. In particular, a head portion 1a and torso portion 1b are coupled through a neck portion integrally formed at the bottom of the head portion 1a. The coupling is effected by incorporating a frictionally slidable engagement of the neck portion 2 with the inner surface of a hole (not shown) in the torso portion 1b. Therefore, the head portion 1a can be moved upward from the position shown in Fig.1A to the position shown in Fig.2. In addition, a pair of wings 3 are mounted on both sides of the torso portion 1b. The wings are rotatably mounted on shafts (not shown) fixed inside of the torso portion 1b. As above, parts of the figure of the angel, i.e., the neck portion 2 and wings 3 (form-conversion members) are provided so as to be capable of displacing relative to the block body 1 so that the block can take two shapes one representing a letter A as with Fig.1A and the other representing an angel as with Fig.1B. The

front surface of the block body 1 maybe provided with a word "angel", while the face, hands, and arrow are drawn on the rear surface of the block body 1. The portion represented by numeral 4 is colored black in the present embodiment, however, the portion may be formed with a stepped concave or formed entirely hollow.

Figs.2A and 2B are perspective views showing an embodiment of the training toy blocks standing for an alphabetical character B. As seen from the figures, a block body generally indicated by numeral 21 is of a shape representing in three-dimensions the letter B. The block body 21 takes a figure of a bus of which the word starts with the letter B. In particular, a front portion 21a and rear portion 21b are coupled through a middle portion 22 in such a way that the block body 21 is made separated or becomes united. The middle portion 22 may be constructed such that the middle portion 22 moves slidable within the interior of the front and rear portions 21a and 21b and stops at a predetermined position so as not to be dismounted from the block body 21. As above, part of the figure of the bus, i.e., the middle portion 22 (form-conversion member) is provided so as to be capable of displacing relative to the block body 21 so that the block can take two shapes one representing a letter B as with Fig.2A and the other representing a bus as with Fig.2B. The front surface of the block body 1 may be provided with a word "bus", while the windows, wheels are drawn on the rear surface of the block body 21. The portion represented by numeral 24 is colored black in the present embodiment, however, the portion may be formed with a stepped concave or formed entirely hollow so that the middle portion 22 may be seen from the outside.

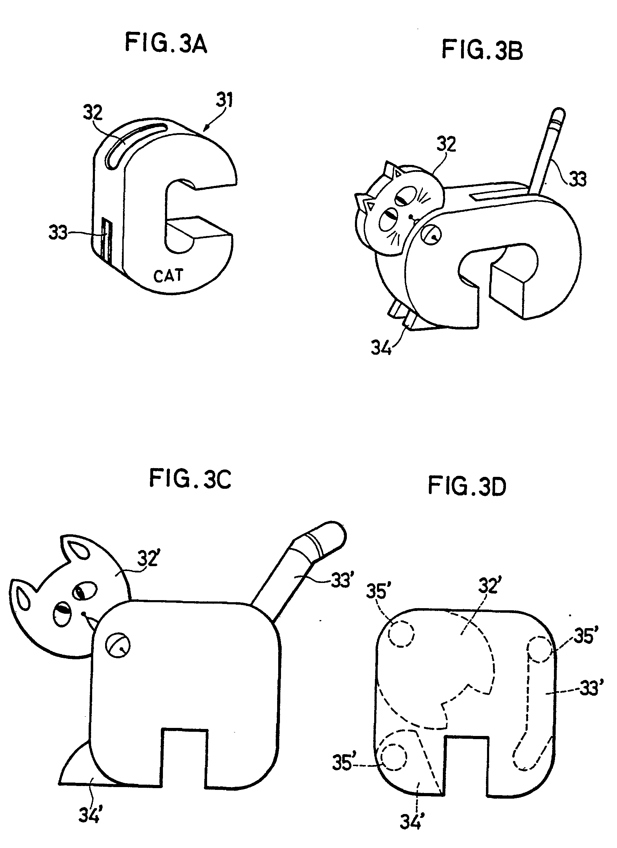

Figs.3A and 3B are perspective views showing an embodiment of the training toy blocks standing for an alphabetical character C. As seen from the figures, a block body generally indicated by numeral 31 is of a shape representing in three-dimensions the letter C. The block body 31 takes a figure of a cat of which the word starts with the letter C. In particular, a head portion 32, tail portion 33, and leg portion 34 are coupled to the block body 31 with not shown shafts being mounted within the block body 31 for the pivotal movement of the head, tail, and leg portions 32, 33, and 34 relative to the block body 31. As above, parts of the figure of the cat, i.e., the head, tail, and leg portions 32, 33, and 34 (form-conversion members) are provided so as to be capable of displacing relative to the block body 31 so that the block can take two shapes one representing a letter C as with Fig.3A and the other representing a cat as with Fig.3B. The front surface of the block body 31 has a word "cat" drawn, while the face and bell are drawn on the rear surface of the block body 31.

Figs.3C and 3D are front views illustrating the mutual positions of the head, tail, and leg portions 32', 33', and 34' of a cat similar to the above embodiment. As shown in the figures, the three portions, i.e., form-conversion members, can be suitably accommodated within the block body of the cat while making the portions turn about three shafts 35'.

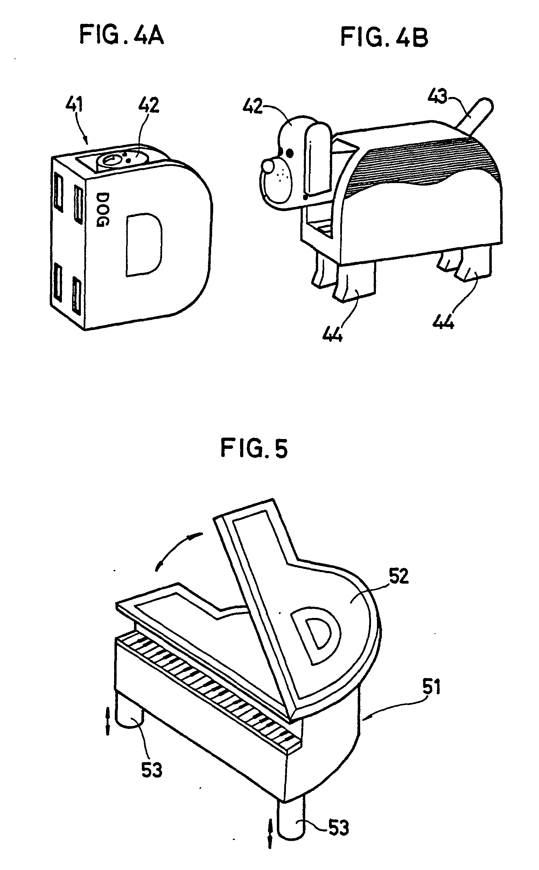

Figs.4A and 4B are perspective views showing an embodiment of the training toy blocks standing for an alphabetical character D. As seen from the figures, a block body generally indicated by numeral 41 is of a shape representing in three-dimensions the letter D. The block body 41 takes a figure of a dog for which the word starts with the letter D. In particular, a head portion 42, tail portion 43, and leg portion 44 are coupled to the block body 31 with not shown shafts being mounted within the block body 41. The former two portions 42 and 43 are arranged to be accommodated within or pulled out of the block body 41, while the last portion 44 is arranged to be pulled out of and pushed into the block body 41. In this embodiment, the conversion members are the head, tail, and leg portions 42, 43, and 44.

Fig.5 is a perspective view showing an embodiment of the training toy blocks according to the present embodiment, the embodiment standing for a piano and a letter P. In the embodiment, the conversion members are a lid portion 52, and leg portion 53 which are arranged to be displaced from a block body 51. The lid portion 52 is mounted so as to be opened or closed relative to the block body 51, while the leg portion 53 is arranged so as to be pulled out of or accommodated within the block body 51.

The mechanism for displacing the conversion member relative to the block body may be a pivotal movement, slidable movement, frictional engagement, swinging engagement, or like mechanisms.

As appreciated from the above embodiments of the training toy blocks of the present invention, since the block body has a shape representing in three-dimensions an alphabetical letter, the shape of a letter can directly be recognized as a visual image of a three-dimensional shape so that the effect of studying letters is very efficient.

Further, since the form-conversion member or members are provided which represent parts of the figure of the object and are capable of displaced relative to the block body, children do not lose interest and do not become tired of while playing with the toy blocks. In addition, by converting the shape of the toy blocks, the block itself can be used independently as a single separate toy.

**Claim**

Training toy blocks each comprising a block body of the shape capable of representing an alphabetical letter in three-dimensions, said block body being provided with a conversion member or with conversion members coupled to said block body in such a way that said conversion member/members is/are movable between two positions one being the position in which the block body forms said alphabetical letter in three-dimensions and the other one being a position in which the block body and the conversion member/members simulate(s) an object to be identified by a word using the alphabetical letter of the block body as the first letter of said word.

## Patentansprüch

Spielklötze zum Lernen, jeweils bestehend aus einem Grundkörper in einer Form, die einen Buchstaben des Alphabets dreidimensional darstellen läßt, wobei der genannte Grundkörper mit einem Umwandlungselement bzw elementen versehen ist, das/die mit dem genannten Grundkörper zwischen zwei Positionen bewegbar verbunden ist/sind, wobei in der einen Position der Grundkörper den genannten Buchstaben dreidimensional bildet und in der anderen Position der Grundkörper sowie das/die Umwandlungselement bzw. elemente einen Gegenstand simuliert/ simulieren, der mit einem mit dem Grundkörper-Buchstaben als Anfangsbuchstaben beginnenden Wort bezeichnet ist.

## Revendication

Blocs-jouets pour étude, comprenant chacun un corps de bloc apte à représenter une lettre de l'alphabet en trois dimensions, ledit corps de bloc étant muni d'un ou plusieurs éléments de conversion associés audit corps de telle façon que le ou lesdits éléments de conversion soient mobiles entre deux positions dans l'une desquelles ledit corps de bloc forme ladite lettre de l'alphabet, et dans l'autre desquelles le corps de bloc et le ou lesdits éléments de conversion offrent l'apparence d'un objet à identifier au moyen d'un mot dont l'initiale est la lettre de l'alphabet formée par ledit corps de bloc.

FIG.1A

FIG.1B

FIG.2A

FIG.2B

1

## FIG.3A

## FIG.3B

## FIG.3C

## FIG.3D

## FIG.4A

41 42

DOG

## FIG.4B

42 43

44 44

## FIG.5

52

51

53

53